(19) Europäisches Patentamt
European Patent Office
Office européen des brevets

(11) **EP 3 517 317 A1**

(12) **EUROPEAN PATENT APPLICATION**
published in accordance with Art. 153(4) EPC

(43) Date of publication:
**31.07.2019 Bulletin 2019/31**

(21) Application number: **17862242.9**

(22) Date of filing: **16.10.2017**

(51) Int Cl.:
**B60C 5/00** *(2006.01)* **B60C 1/00** *(2006.01)*
**B60C 9/18** *(2006.01)* **B60C 11/00** *(2006.01)*

(86) International application number:
**PCT/JP2017/037358**

(87) International publication number:
**WO 2018/074414 (26.04.2018 Gazette 2018/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **18.10.2016 JP 2016204526**

(71) Applicant: **Sumitomo Rubber Industries, Ltd.**
**Kobe-shi, Hyogo 651-0072 (JP)**

(72) Inventors:
• **NAKATANI, Masako**
**Kobe-shi**
**Hyogo 651-0072 (JP)**
• **KAWACHI, Takahiro**
**Kobe-shi**
**Hyogo 651-0072 (JP)**
• **YAMADA, Ayuko**
**Kobe-shi**
**Hyogo 651-0072 (JP)**

• **NAKADERA, Keiichi**
**Kobe-shi**
**Hyogo 651-0072 (JP)**
• **MUKOUGUCHI, Daiki**
**Kobe-shi**
**Hyogo 651-0072 (JP)**
• **KATO, Fumiya**
**Kobe-shi**
**Hyogo 651-0072 (JP)**
• **HAMAMURA, Kenji**
**Kobe-shi**
**Hyogo 651-0072 (JP)**
• **YOSHIZUMI, Takuma**
**Kobe-shi**
**Hyogo 651-0072 (JP)**
• **TOYA, Subaru**
**Kobe-shi**
**Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(54) **PNEUMATIC TIRE**

(57) To provide a pneumatic tyre without decrease in noise reduction effect during running.

[Solution] It is a pneumatic tyre 1. The pneumatic tyre 1 has a noise damper 20 fixed to a tyre inner cavity surface 16 and made of a porous material. In the noise damper 20, a ratio (E2/E1) between breaking energy E2 after thermal aging performed by leaving the noise damper for 1000 hours under an environment of 80 degrees Celsius and breaking energy E1 before the thermal aging is 0.7 or more.

FIG.1

EP 3 517 317 A1

## Description

### Technical Field

The present invention relates to a pneumatic tyre provided with a noise damper on an inner cavity surface of the tyre.

### Background Art

Patent Literature 1 below has proposed a pneumatic tyre in which a noise damper made of a porous material is fixed to an inner cavity surface of the tyre. The noise damper configured as such can absorb cavity resonance noise in a tyre inner cavity. Patent document 1: Japanese Patent Publication No. 4960626

### Disclosure of the Invention

### Problems to be solved by the Invention

The air in the tyre inner cavity becomes hot during running. when the noise damper is exposed to such a high temperature tyre cavity for a long time, the noise damper is hardened. when the noise damper is hardened as described above, there is a problem that the cavity resonance noise in the tyre cavity cannot be sufficiently absorbed.
The present invention was made in view of the above, and a primary object thereof is to provide a pneumatic tyre capable of preventing decrease in noise reduction effect during running.

### Means for solving the Problem

The present invention is a pneumatic tyre comprising a noise damper fixed to a tyre inner cavity surface and made of a porous material, wherein in the noise damper, a ratio (E2/E1) between breaking energy E2 after thermal aging performed by leaving the noise damper for 1000 hours under an environment of 80 degrees Celsius and breaking energy E1 before the thermal aging is 0.7 or more.
In the pneumatic tyre according to the present invention, density of the noise damper may be in a range of from 10 to 40 kg/m3.
In the pneumatic tyre according to the present invention, tensile strength of the noise damper may be in a range of from 70 to 115 kPa.
The pneumatic tyre according to the present invention may further comprise a carcass extending between a pair of bead portions, a belt layer arranged on an outer side in a radial direction of the carcass and inside a tread portion, and a damping rubber body arranged inside the tread portion and on an inner side or an outer side in a tyre radial direction of the belt layer, wherein a width W1 in a tyre axial direction of the damping rubber body may be in a range of from 60% to 130% of a width w2 in the tyre axial direction of the belt layer.
In the pneumatic tyre according to the present invention, a ratio (H1/H2) between hardness H1 of the damping rubber body and hardness H2 of a tread rubber arranged in the tread portion may be in a range of from 0.5 to 1.0.
The pneumatic tyre according to the present invention may further comprise a tread rubber arranged in a tread portion, wherein in the tread rubber, a loss tangent tan $\delta$ at zero degrees Celsius may be 0.40 or more and the loss tangent tan $\delta$ at 70 degrees Celsius may be 0.20 or less.
The pneumatic tyre according to the present invention may further comprise a tread rubber arranged in a tread portion, wherein the tread rubber may contain carbon black, silica, and sulfur, and a content A1 (phr) of the carbon black, a content A2 (phr) of the silica, and a content A3 (phr) of the sulfur may satisfy relationship of a following expression (1):

$$(1.4 \times A1 + A2) / A3 \geq 20 \ldots (1).$$

### Advantageous Effects of the Invention

The pneumatic tyre according to the present invention comprises the noise damper fixed to the inner cavity surface of the tyre and formed of the porous material. The noise damper configured as such can absorb the cavity resonance noise in the tyre inner cavity.
In the noise damper, the ratio (E2/E1) between the breaking energy E2 after the thermal aging performed by leaving the noise damper for 1000 hours under the environment of 80 degrees Celsius and the breaking energy E1 before the thermal aging is 0.7 or more. The breaking energy is a parameter indicating flexibility of the noise damper. Thereby, the pneumatic tyre of the present invention can suppress hardening of the noise damper during running in which temperature of the air in the tyre inner cavity becomes high, therefore, it is possible that decrease of the noise reduction effect is prevented.

**Brief Description of the Drawings**

[Fig. 1] a cross-sectional view of a pneumatic tyre as an embodiment of the present invention.
[Fig. 2] a cross-sectional view of a pneumatic tyre as another embodiment of the present invention.
[Fig. 3] a cross-sectional view of a pneumatic tyre as yet another embodiment of the present invention.

**Description of the Reference Signs**

1    pneumatic tyre
16   tyre inner cavity surface
20   noise damper

**Best Mode for carrying out the Invention**

An embodiment of the present invention will now be described in conjunction with accompanying drawings.

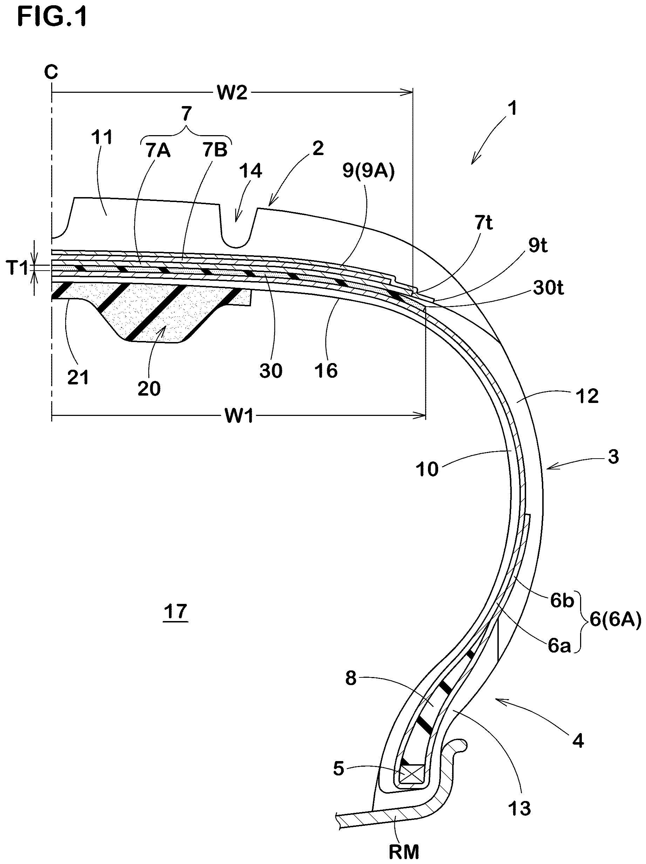

Fig. 1 is a tyre meridian section passing through a tyre rotational axis of a pneumatic tyre 1 (hereinafter, may be simply referred to as "tyre 1") in a standard state. Here, the standard state is a state in which the tyre is mounted on a standard rim (RM), inflated to a standard inner pressure, and loaded with no tyre load. Hereinafter, dimensions and the like of various parts of the tyre 1 are those measured under the standard state, unless otherwise noted.

The "standard rim" is a wheel rim specified for the concerned tyre by a standard included in a standardization system on which the tyre is based, for example, the "normal wheel rim" in JATMA, "Design Rim" in TRA, and "Measuring Rim" in ETRTO.

The "standard pressure" is air pressure specified for the concerned tyre by a standard included in a standardization system on which the tyre is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. when the tyre is for a passenger car, it is set to 200 kPa uniformly in consideration of the actual use frequency and the like.

As shown in Fig. 1, the tyre 1 is suitably used as a radial tyre for a passenger car, for example. The tyre 1 in this embodiment includes a carcass 6, a belt layer 7, a band layer 9, an inner liner 10, a noise damper 20, and a damping rubber body 30.

The carcass 6 extends between a pair of bead portions 4, 4. The carcass 6 is formed of at least one, one in this embodiment, carcass ply 6A. The carcass ply 6A includes a main body portion (6a) extending from a tread portion 2 via a sidewall portion 3 to a bead core 5 of the bead portion 4 and a turned up portion (6b) connected with the main body portion (6a) and turned up around the bead core 5 from inside to outside in a tyre axial direction. Between the main body portion (6a) and the turned up portion (6b), a bead apex rubber 8 extending outwardly in a tyre radial direction from the bead core 5 is arranged.

The carcass ply 6A is provided with a carcass cord (not shown). The carcass cord is arranged at an angle in a range of from 80 to 90 degrees with respect to a tyre equator (C), for example. An organic fiber cord such as aromatic polyamide and rayon is used for the carcass cord, for example.

On an outer side of the carcass 6, a tread rubber 11 arranged in the tread portion 2, a sidewall rubber 12 forming an outer surface of the sidewall portion 3, and a bead rubber 13 forming an outer surface of the bead portion 4 are arranged. The tread rubber 11 is provided with a groove 14 concave toward an inner side in the tyre radial direction from a ground contacting surface thereof.

The belt layer 7 id arranged on an outer side in the tyre radial direction of the carcass 6 and inside the tread portion 2. The belt layer 7 in this embodiment is composed of two belt plies 7A and 7B arranged respectively on an inner side and an outer side in the tyre radial direction. The belt plies 7A and 7B are provided with belt cords (not shown). The belt cords are arranged at an angle in a range of from 10 to 35 degrees with respect to a tyre circumferential direction, for example. These belt plies 7A and 7B are overlapped with each other in such a manner that the belt cords cross each other. For the belt cords, steel, aramid, rayon or the like is used, for example.

The band layer 9 is arranged on an outer side in the tyre radial direction of the belt layer 7. The band layer 9 in this embodiment is composed of a band ply 9A. The band ply 9A has a band cord (not shown) wound helically at an angle of 10 degrees or less, preferably 5 degrees or less. For the band cord, an organic fiber cord such as a nylon cord or the like is used, for example.

The inner liner 10 is arranged on the inner side in the tyre radial direction of the carcass 6. This inner liner 10 forms a tyre inner cavity surface 16. The inner liner 10 is made of an air impermeable butyl rubber, for example.

The noise damper 20 is made of a porous material having a lot of holes on a surface thereof. This noise damper 20 is fixed to the tyre inner cavity surface 16 of the tread portion 2. The noise damper 20 in this embodiment is formed in an elongated belt shape having a bottom surface to be fixed to the tyre inner cavity surface 16 and extends in the tyre circumferential direction. Further, outer end portions in the tyre circumferential direction of the noise damper 20 are butted each other. Thereby, the noise damper 20 is formed in a substantially annular shape. Note that the outer end portions of the noise damper 20 may be spaced apart in the tyre circumferential direction.

As the porous material, a porous sponge material is used, for example. The sponge material is a spongy porous structure body. Further, as the sponge material, it is not limited to a so-called sponge itself having interconnected cells formed by foamed rubber or a synthetic resin. The sponge material also includes an animal fiber, a vegetable fiber, a synthetic fiber, or the like entangled and integrally connected, for example. The "porous structure body" includes not only a body having the interconnected cells but also a body having independently closed cells.

The noise damper 20 in this embodiment has substantially the same cross-sectional shape at an arbitrary position in the tyre circumferential direction except for the outer end portions. Further, as the cross-sectional shape of the noise damper 20, it is formed as a flat and horizontally elongated shape in which a height thereof in the tyre radial direction is smaller than a width thereof in the tyre axial direction. Thereby, it is possible that collapse and deformation of the noise damper 20 during running is prevented. Furthermore, on a side of an inner surface in the tyre radial direction of the noise damper 20, a concave groove 21 extending continuously in the tyre circumferential direction is provided.

with the noise damper 20 configured as such, by a porous portion on the surface and inside thereof, it is possible that vibration energy of the vibrating air is converted into thermal energy and consumed. Thereby, the noise damper 20 decreases sound (cavity resonance energy), therefore, it is possible that the cavity resonance noise (running noise in the vicinity of 250 Hz, for example) in the tyre inner cavity is absorbed. Further, the porous material (sponge material) forming the noise damper 20 is easy to deform such as shrink, bend, or the like. Thereby, it is possible that the noise damper 20 deforms flexibly following the deformation of the inner liner 10 during running.

In order to effectively suppress cavity resonance in a tyre inner cavity 17, it is preferred that a total volume V1 of the noise damper 20 is in a range of from 0.4% to 30% of a total volume V2 of the tyre inner cavity 17. Here, the total volume V1 of the noise damper 20 is an apparent total volume of the noise damper 20, which means the volume determined from the outer shape including the internal cells. Further, the total volume V2 of the tyre inner cavity 17 is approximately obtained by the following expression (2) in the standard state.

$$V2 = A \times \{(Di - Dr) / 2 + Dr\} \times \pi \dots (2)$$

Here,

A: a cross sectional area of the tyre inner cavity obtained by CT scanning a tyre/rim assembly
Di: a maximum outer diameter of the inner cavity surface of the tyre
Dr: a diameter of the rim
$\pi$: the circumference ratio

Note that when the total volume V1 of the noise damper 20 is less than 0.4% of the total volume V2 of the tyre inner cavity 17, it is possible that the vibration energy of the air is not sufficiently converted into the thermal energy. On the other hand, when the total volume V1 is more than 30% of the total volume v2, it is possible that the weight and the manufacturing cost of the tyre 1 is increased.

It is preferred that tensile strength of the noise damper 20 is in a range of from 70 to 115 kPa. Note that when the tensile strength of the noise damper 20 is less than 70 kPa, it is possible that durability performance of the noise damper 20 is deteriorated. Conversely, if the tensile strength of the noise damper 20 is more than 115 kPa, when a foreign object such as a nail sticks into a region including the noise damper 20 of the tread portion 2, the noise damper 20 may be pulled by the foreign object, therefore, it is possible that the noise damper 20 comes off the tyre inner cavity surface 16 of the tread portion 2.

Further, it is preferred that density of the noise damper 20 is in a range of from 10 to 40 kg/m3. It is possible that the noise damper 20 configured as such effectively absorb the cavity resonance noise without increasing mass of the tyre 1.

In the noise damper 20 in this embodiment, a ratio between breaking energy E2 after thermal aging and breaking energy E1 before thermal aging (hereinafter, may be referred to simply as a "ratio of breaking energy") E2/E1 is set to 0.7 or more. The thermal aging in this embodiment is carried out by leaving the noise damper 20 for 1000 hours under an environment of 80 degrees Celsius. By the thermal aging as just described, it is possible to reproduce the noise damper 20 that has been exposed to the high temperature tyre inner cavity 17 for a long time.

Measurement of the breaking energies E1 and E2 was performed by free falling of a block-like weight onto one surface of a test piece (size: thickness 10 mm × width 25 mm × length 200 mm) cut out from the noise damper 20. Then, until a part of the noise damper 20 is damaged, the height and the weight of the weight are gradually increased, and the breaking energies E1 and E2 are obtained by multiplying the height and the weight when the noise damper 20 is damaged together.

The breaking energies E1 and E2 are parameters indicating flexibility of the noise damper 20. The greater the breaking energies E1 and E2, the greater the flexibility of the noise damper 20 is. In the noise damper 20 in this embodiment, the ratio of breaking energy (E2/E1) is set to 0.7 or more, therefore, it is possible to decrease a change of the breaking energies E1 and E2 between before and after the thermal aging. Thereby, even when the noise damper 20 is exposed to the high temperature tyre inner cavity 17 for a long time, the flexibility before the aging is maintained. Therefore, in the tyre 1 of the present invention, it is possible that hardening of the noise damper 20 is suppressed during running in which temperature of the air in the tyre inner cavity 17 becomes high, thus, it is possible that decrease of the noise reduction effect is prevented.

In order to effectively exert such an effect, the ratio of breaking energy (E1/E2) is more preferably 0.8 or more, and further more preferably 0.9 or more. Note that when the ratio of breaking energy (E1/E2) is less than 0.7, the hardening of the noise damper 20 cannot be suppressed, therefore, it is possible that the cavity resonance noise in the tyre inner cavity 17 cannot be sufficiently absorbed.

The ratio of breaking energy (E2/E1) can be easily set by adjusting a compounding amount of a synthetic resin in the porous material constituting the noise damper 20, for example. Further, the breaking energy E1 before the thermal aging and the breaking energy E2 after the thermal aging can be appropriately set as long as the ratio of breaking energy (E2/E1) satisfies the above range.

As shown in Fig. 1, the damping rubber body 30 in this embodiment is arranged inside the tread portion 2. The damping rubber body 30 is arranged on the inner side in the tyre radial direction or the outer side in the tyre radial direction (in this embodiment, the inner side in the tyre radial direction) of the belt layer 7. Further, the damping rubber body 30 in this embodiment is arranged between the carcass 6 and the belt layer 7. The damping rubber body 30 in this embodiment is made of a rubber different from a topping rubber (not shown) included in the carcass ply 6A and the belt ply 7A.

In this embodiment, hardness H1 of the damping rubber body 30 is set to be smaller than hardness H2 of the tread rubber 11 arranged inside the tread portion 2. Here, the "hardness" means hardness measured in accordance with Japanese Industrial Standard JIS-K 6253 by a type-A durometer under an environment of 23 degrees Celsius.

It is possible that the damping rubber body 30 configured as such effectively suppresses vibration of the tread portion 2. Thereby, it is possible that the tyre 1 effectively decreases the running noise (in the vicinity of 160 Hz, for example). Moreover, it is possible that the tyre 1 decreases the running noise in the vicinity of 250 Hz by the noise damper 20 described above, therefore, it is possible that noise performance is effectively improved. Further, the damping rubber body 30 in this embodiment is arranged between the carcass 6 and the belt layer 7, therefore, vibration of the carcass 6 and the belt layer 7 is suppressed, thereby, it is possible that road noise is decreased.

In order to effectively exert such an effect, it is preferred that a ratio (H1/H2) between the hardness H1 of the damping rubber body 30 and the hardness H2 of the tread rubber 11 is set to be in a range of from 0.5 to 1.0 (that is 0.5 or more and less than 1.0). Note that when the ratio (H1/H2) is 1.0 or more, it is possible that the vibration of the tread portion 2 cannot be sufficiently suppressed. Conversely, when the ratio (H1/H2) is less than 0.5, it is possible that rigidity of the damping rubber body 30 becomes small, therefore, it is possible that steering stability cannot be maintained. From such a point of view, the ratio (H1/H2) is preferably 0.8 or less and preferably 0.6 or more.

The hardness H1 of the damping rubber body 30 and the hardness H2 of the tread rubber 11 can be appropriately set as long as the above-described ratio (H1/H2) satisfies the above-described range. It is preferred that the hardness H1 in this embodiment is set to be in a range of from 30 to 73 degrees. It is preferred that the hardness H2 in this embodiment is set to be in a range of from 55 to 75 degrees. Thereby, it is possible that the tyre 1 effectively suppresses the vibration of the tread portion 2 while maintaining the steering stability.

Note that rubber specialized for adhesion performance (that is, rubber having a small hardness) is used for the topping rubber (not shown) included in the carcass ply 6A and the belt ply 7A. Thereby, it is preferred that the hardness H1 of the damping rubber body 30 is greater than a hardness H3 of the topping rubber. It is preferred that a ratio (H1/H3) of the hardness H1 of the damping rubber body 30 and the hardness H3 of the topping rubber is in a range of from 0.4 to 1.2.

A width W1 in the tyre axial direction of the damping rubber body 30 can be suitably set. The width W1 of the damping rubber body 30 in this embodiment is set to be in a range of from 60% to 130% of a width w2 in the tyre axial direction of the belt layer 7. It is possible that the damping rubber body 30 configured as such suppresses the vibration of the tread portion 2 while preventing an increase in the mass of the tyre 1.

when the width W1 of the damping rubber body 30 is less than 60% of the width w2 of the belt layer 7, it is possible that the vibration of the tread portion 2 cannot be sufficiently suppressed. Conversely, when the width W1 of the damping rubber body 30 is more than 130% of the width w2 of the belt layer 7, it is possible that the increase in the mass of the tyre 1 cannot be prevented. From such a point of view, the width W1 of the damping rubber body 30 is preferably 70% or more and preferably 120% or less of the width w2 of the belt layer 7.

A position of an outer end (30t) in the tyre axial direction of the damping rubber body 30 can be appropriately set. The outer end (30t) in this embodiment terminates on an outer side in the tyre axial direction of an outer end (7t) in the tyre axial direction of the belt layer 7 and on an inner side in the tyre axial direction of an outer end (9t) in the tyre axial direction of the band layer 9. Thereby, it is possible that the damping rubber body 30 covers the entire area in the tyre axial direction of the belt layer 7 on the inner side in the tyre radial direction. Therefore, it is possible that the damping rubber body 30 effectively decreases the running noise (in the vicinity of 160 Hz, for example). Further, the outer end (30t) of the damping rubber body 30, the outer end (7t) of the belt layer 7, and the outer end (9t) of the band layer 9 are positionally displaced in the tyre axial direction from each other. Thereby, it is possible that formation of large rigidity difference in the tread portion 2 of the tyre 1 is prevented, therefore, it is possible that the steering stability is improved.

A maximum thickness T1 of the damping rubber body 30 can be appropriately set. when the maximum thickness T1 is small, it is possible that the vibration of the tread portion 2 cannot be sufficiently suppressed. Conversely, when the maximum thickness T1 is large, the movement of the tread portion 2 becomes large, therefore, it is possible that the steering stability is deteriorated. From such a point of view, it is preferred that the maximum thickness T1 is 4% or more and 20% or less of a maximum thickness T2 (not shown) of the tread portion 2.

It is preferred that a loss tangent tan $\delta$ at zero degrees Celsius of the tread rubber 11 is 0.40 or more. Thereby, wet grip performance of the tyre 1 is improved. This increase amount in the wet grip performance is devoted to a decrease of volume of the tread portion 2 due to the groove 14, for example, therefore, it is possible that the running noise is further decreased.

It is preferred that the loss tangent tan $\delta$ at 70 degrees Celsius of the tread rubber 11 is 0.20 or less. Thereby, it is possible that rolling resistance of the tyre 1 is decreased, therefore, it is possible that deterioration of fuel efficiency due to the provision of the noise damper 20 and the damping rubber body 30 is suppressed.

The loss tangent tan $\delta$ at zero degrees Celsius and the loss tangent tan $\delta$ at 70 degrees Celsius are values measured in accordance with Japanese Industrial Standard JIS-K6394 by using a viscoelasticity spectrometer available from Iwamoto Quartz GlassLab Co., Ltd. under a condition of respective temperature (zero degrees Celsius or 70 degrees Celsius), a frequency of 10 Hz, an initial tensile strain of 10%, and an amplitude of dynamic strain of $\pm$ 2%.

The tread rubber 11 in this embodiment contains carbon black, silica, and sulfur. A content A1 (phr) of the carbon black, a content A2 (phr) of the silica, and a content A3 (phr) of the sulfur can be set as appropriate. In this embodiment, the content A1 (phr) of the carbon black, the content A2 (phr) of the silica, and the content A3 (phr) of the sulfur satisfy relationship of the following expression (1):

$$(1.4 \times A1 + A2) / A3 \geq 20 \ldots (1).$$

By satisfying the above expression (1), the ratio of the content A1 of carbon black and the content A2 of silica in the tread rubber 11 can be increased, therefore, it is possible that anti-wear performance is improved. It is possible that the running noise is further decrease by devoting this increase in the anti-wear performance to the decrease of the volume of the tread portion 2 due to the groove 14, for example. Further, occurrence of uneven wear is suppressed even when puncture repair liquid used for repairing puncture is unevenly distributed.

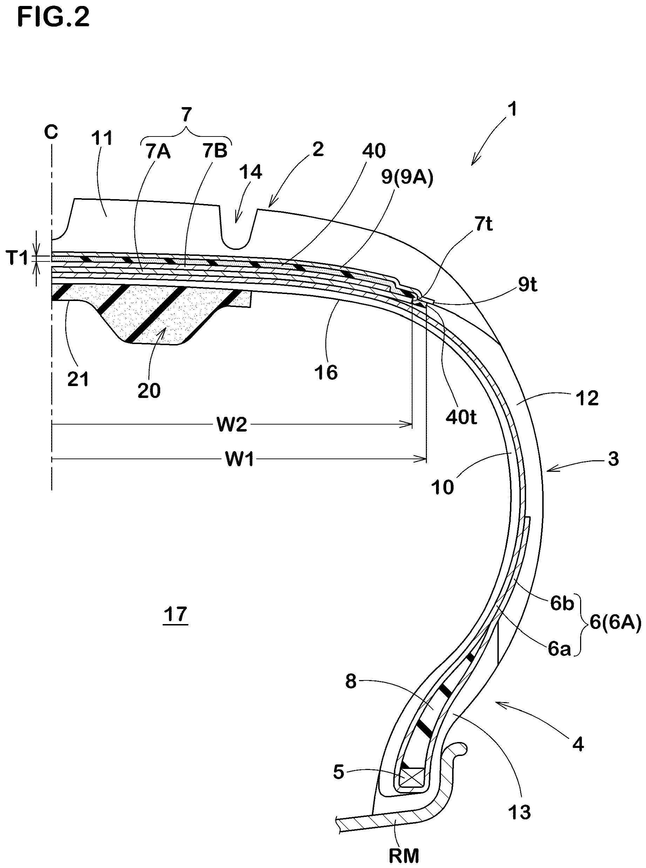

Although the damping rubber body 30 in this embodiment is arranged on the inner side in the tyre radial direction of the belt layer 7, it may be arranged on the outer side in the tyre radial direction of the belt layer 7, for example. Fig. 2 is a tyre meridian section passing through the tyre rotational axis of the tyre 1, in the standard state, according to another embodiment of the present invention. Note that, in this embodiment, the same components as those of the previous embodiment are denoted by the same reference numerals, and the description thereof may be omitted.

A damping rubber body 40 in this embodiment is disposed between the belt layer 7 and the band layer 9. Like the damping rubber body 30 in the previous embodiment, the damping rubber body 40 configured as such can effectively suppress the vibration of the tread portion 2. Thereby, it is possible that the damping rubber body 40 effectively decreases the running noise (in the vicinity of 160 Hz, for example). Moreover, the damping rubber body 40 is disposed between the belt layer 7 and the band layer 9, therefore, the vibration of the belt layer 7 and the band layer 9 is suppressed, thereby, it is possible that the road noise is decreased.

A position of an outer end (40t) in the tyre axial direction of the damping rubber body 40 in this embodiment can be appropriately set. The outer end (40t) in this embodiment terminates on the outer side in the tyre axial direction of the outer end (7t) of the belt layer 7 and on the inner side in the tyre axial direction of the outer end (9t) of the band layer 9. Thereby, it is possible that the damping rubber body 40 covers the entire area in the tyre axial direction of the belt layer 7 on the outer side in the tyre radial direction. Therefore, it is possible that the damping rubber body 40 effectively decreases the running noise (in the vicinity of 160 Hz, for example). Further, the outer end (40t) of the damping rubber body 40, the outer end (7t) of the belt layer 7, and the outer end (9t) of the band layer 9 are positionally displaced in the tyre axial direction. Thereby, it is possible that the formation of large rigidity difference in the tread portion 2 of the tyre 1 is prevented.

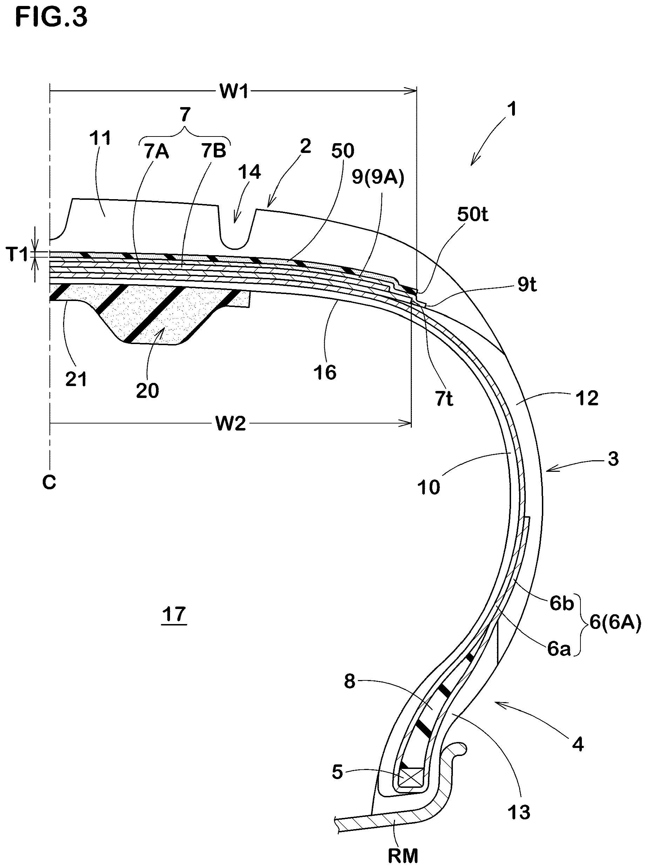

Fig. 3 is a tyre meridian section passing through the tyre rotational axis of the tyre 1, in the standard state, according to yet another embodiment of the present invention. Note that, in this embodiment, the same components as those of the previous embodiments are denoted by the same reference numerals, and the description thereof may be omitted.

A damping rubber body 50 in this embodiment is arranged on the outer side in the tyre radial direction of the band layer 9. The damping rubber body 50 configured as such can effectively suppress the vibration of the tread portion 2. Thereby, it is possible that the damping rubber body 50 effectively suppresses the running noise (in the vicinity of 160 Hz, for example). Moreover, the damping rubber body 50 is arranged on the outer side in the tyre radial direction of the band layer 9, therefore, the vibration of the band layer 9 is suppressed, thereby, it is possible that the road noise is decreased.

A position of an outer end (50t) in the tyre axial direction of the damping rubber body 50 in this embodiment can be appropriately set. The outer end (50t) in this embodiment terminates on the outer side in the tyre axial direction of the outer end (7t) of the belt layer 7 and on the inner side in the tyre axial direction of the outer end (9t) of the band layer 9. Thereby, it is possible that the damping rubber body 50 covers the entire area in the tyre axial direction of the belt layer 7 on the outer side in the tyre radial direction. Therefore, it is possible that the damping rubber body 50 effectively decreases the running noise (in the vicinity of 160 Hz, for example). Further, the outer end (50t) of the damping rubber body 50, the outer end (7t) of the belt layer 7, and the outer end (9t) of the band layer 9 are positionally displaced in the tyre axial direction. Thereby, it is possible that the formation of large rigidity difference in the tread portion 2 of the tyre 1 is prevented.

while detailed description has been made of the especially preferred embodiments of the present invention, the present invention can be embodied in various forms without being limited to the illustrated embodiments.

**Working Examples**

[Working Examples A]

Tyres having the basic structure shown in Fig. 1 and the noise damper of Table 1 were manufactured, and then their performance was evaluated (Examples 1 to 21). Further, for comparison, a tyre not having the noise damper and the damping rubber body (Reference 1), tyres in which the ratio of the breaking energy (E2/E1) was less than 0.7 (References 2 and 3) were manufactured, and then their performance was evaluated. The specifications common to each of the Examples and the References are as follows.

Tyre size: 165/65R18
Rim size: 18x7JJ
Inner pressure: 320 kPa
Test vehicle: domestically produced FR car with displacement of 2500 cc
Composition of Tread rubber:

Natural rubber (TSR20): 15 phr
SBR1 (terminal modified): 45 phr (amount of bound styrene: 28%, vinyl group content: 60%, glass transition point: -25 degrees Celsius)
SBR2 (terminal modified): 25 phr (amount of bound styrene: 35%, vinyl group content: 45%, glass transition point: -25 degrees Celsius)
BR (BR150B): 15 phr
Silane coupling agent (Si266): 4 phr
Resin (SYLVARES SA85 available from Arizona Chemical Co.): 8 phr
Oil: 4 phr
Wax: 1.5 phr
Age resistor (6C): 3 phr

Stearic acid: 3 phr
Zinc oxide: 2 phr
Vulcanization accelerator (NS): 2 phr
Vulcanization accelerator (DPG): 2 phr
Carbon black (N220): 5 phr
Silica (VN3, 1115MP): 70 phr
Sulfur: 2 phr

Composition of damping rubber body:

Natural rubber (TSR20): 65 phr
SBR (Nipol 1502): 35 phr
Carbon black N220: 52 phr
Oil: 15 phr
Stearic acid: 1.5 phr
Zinc oxide: 2 phr
Sulfur: 3 phr
Vulcanization accelerator (CZ): 1 phr

Maximum thickness T1 of damping rubber body: 1 mm
Maximum thickness T2 of tread rubber: 10 mm
Ratio (T1/T2): 10%
Hardness H1 of damping rubber body in vulcanized tyre: 58 degrees
Hardness H2 of tread rubber in vulcanized tyre: 64 degrees
Ratio (H1/H2) of Hardness H1 of damping rubber body and Hardness H2 of tread rubber: 0.9
Hardness H3 of topping rubber of carcass ply and belt ply: 60 degrees
width w2 in tyre axial direction of belt layer: 120 mm
Ratio (W1/W2) of width W1 of damping rubber body and width w2 of belt layer: 100%
Loss tangent tan $\delta$ at zero degrees of tread rubber: 0.50
Loss tangent tan $\delta$ at 70 degrees of tread rubber: 0.10

```
(1.4 × carbon black content A + silica content B) / sulfur
```

content C: 15

Test methods were as follows.

< Noise performance during running >

Each of the test tyres was mounted on the above rim and mounted on all wheels of the above test vehicle under the above condition of the inner pressure. A total sound pressure (decibel) of the running noise (frequencies in a range of from 100 to 200 Hz and in a range of from 200 to 300 Hz) was measured by using a sound concentrating microphone attached to the center part of the backrest of the driver's seat while the test vehicle was driven on a road for measuring road noise (rough asphalt surface road) at a speed of 60 km/h. The results are indicated by an index based on the Example 1 being 100, wherein the larger the numerical value, the smaller the running noise is, which is better. Note that when the index is 91 or more, the noise performance is good.

< Separation resistance performance of Noise damper when nail sticks >

Each of the test tyres was mounted on the above rim and mounted on all wheels of the above test vehicle under the above condition of the inner pressure. And each of the test tyres was punctured by rolling on a nail, then the damaged part was disassembled to measure the area of separation of the noise damper from the tyre inner cavity surface of the tread portion due to the noise damper being pulled by the nail. The results are indicated by an index based on the Example 1 being 100, wherein the larger the numerical value, the higher separation resistance performance is, which is better. Note that when the index is 95 or more, the separation resistance performance is good.

< Tyre mass >

The mass per tyre was measured for each of the test tyres. The results are indicated by an index based on the reciprocal of the mass of the tyre of the Example 1 being 100, wherein the larger the numerical value, the smaller the tyre is, which is better.

< Durability performance of Noise damper >

Each of the test tyres was mounted on the above rim and inflated to the above inner pressure. Then, by using a drum testing machine, a distance until the noise damper and its vicinity were damaged was measured under the conditions of the tyre load of 4.8 kN and the speed of 80 km/h. The results are indicated by an index based on the value of the Example 1 being 100, wherein the larger the numerical value, the higher the durability performance is, which is better. Note that when the index is 95 or more, the durability performance of the noise damper is good.

The test results are shown in Table 1.

Table 1. (1/2)

| | Ref.1 | Ref.2 | Ref.3 | Ex.1 | Ex.2 | Ex.3 | Ex.4 | Ex.5 | Ex.6 | Ex.7 | Ex.8 | Ex.9 |
|---|---|---|---|---|---|---|---|---|---|---|---|---|
| Presence (P) or Absence (A) of Noise damper and Damping rubber body | A | P | P | P | P | P | P | P | P | P | P | P |
| Ratio (E2/E1) between Breaking energy E2 after thermal aging and Breaking energy E1 before thermal aging | - | 0.5 | 0.6 | 0.7 | 0.8 | 0.9 | 0.8 | 0.8 | 0.8 | 0.8 | 0.8 | 0.8 |
| Density of Noise damper [kg/m3] | - | 27.0 | 27.0 | 27.0 | 27.0 | 27.0 | 5.0 | 10.0 | 18.0 | 34.0 | 40.0 | 50.0 |
| Ratio (V1/V2) of Volume V1 of Noise damper and Total volume V2 of Tyre inner cavity [%] | - | 15.0 | 15.0 | 15.0 | 15.0 | 15.0 | 15.0 | 15.0 | 15.0 | 15.0 | 15.0 | 15.0 |
| Tensile strength of Noise damper [kPa] | - | 90.0 | 90.0 | 90.0 | 90.0 | 90.0 | 90.0 | 90.0 | 90.0 | 90.0 | 90.0 | 90.0 |
| Noise performance during running [index] [larger is better] | 70 | 80 | 90 | 100 | 110 | 115 | 105 | 107 | 109 | 113 | 115 | 116 |
| Separation resistance performance of Noise damper when Nail sticks [index] [larger is better] | - | 100 | 100 | 100 | 100 | 100 | 100 | 100 | 100 | 100 | 100 | 100 |
| Tyre mass [index] [larger is better] | 115 | 100 | 100 | 100 | 100 | 100 | 102 | 101 | 101 | 99 | 99 | 98 |
| Durability performance of Noise damper [index] [larger is better] | - | 100 | 100 | 100 | 100 | 100 | 100 | 100 | 100 | 100 | 100 | 100 |

Table 1. (2/2)

| | Ex.10 | Ex.11 | Ex.12 | Ex.13 | Ex.14 | Ex.15 | Ex.16 | Ex.17 | Ex.18 | Ex.19 | Ex.20 | Ex.21 |
|---|---|---|---|---|---|---|---|---|---|---|---|---|
| Presence (P) or Absence (A) of Noise damper and Damping rubber body | P | P | P | P | P | P | P | P | P | P | P | P |
| Ratio (E2/E1) between Breaking energy E2 after thermal aging and Breaking energy E1 before thermal aging | 0.8 | 0.8 | 0.8 | 0.8 | 0.8 | 0.8 | 0.8 | 0.8 | 0.8 | 0.8 | 0.8 | 0.8 |
| Density of Noise damper [kg/m3] | 27.0 | 27.0 | 27.0 | 27.0 | 27.0 | 27.0 | 27.0 | 27.0 | 27.0 | 27.0 | 27.0 | 27.0 |
| Ratio (V1/V2) of Volume V1 of Noise damper and Total volume V2 of Tyre inner cavity [%] | 0.3 | 0.4 | 5.0 | 25.0 | 30.0 | 35.0 | 15.0 | 15.0 | 15.0 | 15.0 | 15.0 | 15.0 |
| Tensile strength of Noise damper [kPa] | 90.0 | 90.0 | 90.0 | 90.0 | 90.0 | 90.0 | 60.0 | 70.0 | 80.0 | 100.0 | 115.0 | 125.0 |
| Noise performance during running [index] [larger is better] | 100 | 101 | 105 | 116 | 120 | 125 | 110 | 110 | 110 | 110 | 110 | 110 |
| Separation resistance performance of Noise damper when Nail sticks [index] [larger is better] | 100 | 100 | 100 | 100 | 100 | 100 | 100 | 100 | 100 | 99 | 98 | 96 |
| Tyre mass [index] [larger is better] | 110 | 105 | 103 | 97 | 95 | 90 | 100 | 100 | 100 | 100 | 100 | 100 |
| Durability performance of Noise damper [index] [larger is better] | 100 | 100 | 100 | 100 | 100 | 100 | 96 | 98 | 99 | 100 | 100 | 100 |

From the test results, it was confirmed that the tyres as the Examples could suppress the running noise without a decrease in the noise reduction effect as compared with the tyres as the References.

[Working Examples B]

Tyres having the basic structure shown in Figs. 1, 2 or 3 and the noise damper and the damping rubber body of Table 2 were manufactured, and then their performance was evaluated (Examples 22 to 38). The specifications common to each of the Examples are the same as those of the Working Examples A except for those listed in Table 2 and shown below.

Ratio (E2/E1): 0.8
Density of noise damper: 27.0 (kg/m3)
Ratio (V1/V2) of total volume V1 of noise damper and total volume V2 of tyre inner cavity: 15 (%)
Tensile strength of noise damper: 90.0 (kPa)
Hardness H1 of damping rubber body of vulcanized tyre: adjusted by changing oil content of the Working Examples A.

The test methods are the same as in the Working Examples A except for the following method.

< Steering stability >

Each of the test tyres was mounted on the above rim and mounted on all wheels of the above test vehicle under the above condition of the inner pressure. while the test vehicle was driven on a dry asphalt test course, characteristics related to steering response, rigid impression, grip, and the like were evaluated by the driver's feeling. The results are indicated by an index based on the Example 22 being 100, wherein a larger numerical value is better.
The test results are shown in Table 2.

Table 2. (1/2)

| | Ex.22 | Ex.23 | Ex.24 | Ex.25 | Ex.26 | Ex.27 | Ex.28 | Ex.29 | Ex.30 | Ex.31 | Ex.32 |
|---|---|---|---|---|---|---|---|---|---|---|---|
| Figure showing Tyre cross section | Fig.1 | Fig.1 | Fig.1 | Fig.1 | Fig.1 | Fig.1 | Fig.1 | Fig.1 | Fig.1 | Fig.1 | Fig.1 |
| Ratio (H1/H2) of Hardness H1 of Damping rubber body and Hardness H2 of Tread rubber | 0.4 | 0.5 | 0.6 | 0.7 | 0.8 | 0.9 | 1.0 | 1.2 | 0.7 | 0.7 | 0.7 |
| Ratio (W1/W2) between Width W1 of Damping rubber body and Width W2 of Belt layer [%] | 100.0 | 100.0 | 100.0 | 100.0 | 100.0 | 100.0 | 100.0 | 100.0 | 50.0 | 60.0 | 70.0 |
| Noise performance during running [index] [larger is better] | 117 | 115 | 114 | 112 | 111 | 110 | 109 | 107 | 108 | 109 | 110 |
| Tyre mass [index] [larger is better] | 100 | 100 | 100 | 100 | 100 | 100 | 100 | 100 | 108 | 106 | 103 |
| Steering stability [index] [larger is better] | 100 | 102 | 103 | 105 | 106 | 107 | 108 | 110 | 108 | 107 | 106 |

Table 2. (2/2)

| | Ex. 33 | Ex. 34 | Ex. 35 | Ex. 36 | Ex. 37 | Ex. 38 |
|---|---|---|---|---|---|---|
| Figure showing Tyre cross section | Fig. 1 | Fig. 1 | Fig. 1 | Fig. 1 | Fig. 2 | Fig. 3 |
| Ratio (H1/H2) of Hardness H1 of Damping rubber body and Hardness H2 of Tread rubber | 0.7 | 0.7 | 0.7 | 0.7 | 0.7 | 0.7 |
| Ratio (W1/W2) between Width W1 of Damping rubber body and Width W2 of Belt layer [%] | 85.0 | 120.0 | 130.0 | 140.0 | 100.0 | 100.0 |
| Noise performance during running [index] [larger is better] | 111 | 114 | 117 | 122 | 107 | 103 |
| Tyre mass [index] [larger is better] | 102 | 98 | 96 | 94 | 100 | 100 |
| Steering stability [index] [larger is better] | 106 | 105 | 104 | 103 | 106 | 107 |

From the test results, it was confirmed that the tyres as the Examples could suppress the running noise without a decrease in the noise reduction effect during running. Further, by setting the ratio (H1/H2) of the hardness H1 of the damping rubber body and the hardness H2 of the tread rubber to the preferable range, it was possible that the steering stability was improved. Furthermore, by setting the ratio (W1/W2) of the width W1 of the damping rubber body and the width w2 of the belt layer to the preferable range, it was possible that the noise performance was improved while preventing the tyre mass from increasing.

[Working Examples C]

Tyres having the basic structure shown in Fig. 1 and the noise damper described in the Working Examples B, the damping rubber body described in the working Examples A, and the tread rubber of Table 3 were manufactured, and then their performance was evaluated (Examples 39 to 49). The specifications common to each of the Examples are the same as those of the Working Examples A except for those listed in Table 3 and shown below. Note that the common specifications of the noise damper are as in the Working Examples B. Further, the common specifications of the damping rubber body are as in the Working Examples A. Composition of Tread rubber:

Same as in the Working Examples A except for carbon black, silica, and sulfur shown below
Carbon black (N220): A (arbitrary) phr
Silica (VN3, 1115MP): B (arbitrary) phr
Sulfur: C (arbitrary) phr
Ratio (E2/E1): same as Ratio (E2/E1) of Working Examples B

The test methods are the same as in the Working Examples A except for the following methods.

< wet grip performance >

Each of the test tyres was mounted on the above rim and mounted on all wheels of the above test vehicle under the above condition of the inner pressure. while the test vehicle was driven on a wet asphalt road, grip performance was evaluated by the driver's feeling. The evaluation was indicated by an index based on the Example 39 being 100, wherein a larger numerical value is better.

< Rolling Resistance Performance >

Each of the test tyres was mounted on the above rim, and then the rolling resistance under the condition of the above inner pressure, tyre load of 4.8 kN, and at a speed of 80 km/h was measured by using a rolling resistance tester. The results are indicated by an index based on the reciprocal of the value of the Example 39 being 100, wherein a larger numerical value is better.

< Anti-wear performance >

Each of the test tyres was mounted on the above rim and mounted on all wheels of the above test vehicle under the above condition of the inner pressure. Then the test vehicle was driven on highways and general roads (including city roads and mountain roads) with two members on the vehicle for a total of 340 km. Then a wear index (running distance / wear amount) was measured in three block-like portions on a tyre circumference of a shoulder land region of the tread portion, and then an average value thereof was calculated. The results are indicated by an index based on the reciprocal of the wear index of the Example 39 being 100, wherein a larger numerical value is better.
The test results are shown in Table 3.

Table 3.

|  | Ex. 39 | Ex. 40 | Ex. 41 | Ex. 42 | Ex. 43 | Ex. 44 | Ex. 45 | Ex. 46 | Ex. 47 | Ex. 48 | Ex. 49 |
|---|---|---|---|---|---|---|---|---|---|---|---|
| Loss tangent tan $\delta$ at zero degrees Celsius of Tread rubber | 0.35 | 0.40 | 0.45 | 0.50 | 0.50 | 0.50 | 0.50 | 0.50 | 0.50 | 0.50 | 0.50 |
| Loss tangent tan $\delta$ at 70 degrees Celsius of Tread rubber | 0.25 | 0.25 | 0.25 | 0.25 | 0.20 | 0.15 | 0.10 | 0.10 | 0.10 | 0.10 | 0.10 |
| $(1.4 \times A1 + A2) / A3$ | 15.0 | 15.0 | 15.0 | 15.0 | 15.0 | 15.0 | 15.0 | 20.0 | 25.0 | 30.0 | 37.5 |

(continued)

|  | Ex. 39 | Ex. 40 | Ex. 41 | Ex. 42 | Ex. 43 | Ex. 44 | Ex. 45 | Ex. 46 | Ex. 47 | Ex. 48 | Ex. 49 |
|---|---|---|---|---|---|---|---|---|---|---|---|
| Noise performance during running [index] [larger is better] | 110 | 110 | 110 | 110 | 110 | 110 | 110 | 110 | 110 | 110 | 110 |
| Wet grip performance [index] [larger is better] | 100 | 105 | 108 | 110 | 109 | 107 | 106 | 107 | 107 | 107 | 107 |
| Rolling resistance performance [index] [larger is better] | 100 | 100 | 100 | 100 | 105 | 107 | 110 | 110 | 110 | 110 | 110 |
| Anti-wear performance [index] [larger is better] | 100 | 100 | 100 | 100 | 100 | 100 | 100 | 105 | 108 | 111 | 115 |

From the test results, it was confirmed that the tyres as the Examples could prevent the deterioration of uniformity after puncture repair while suppressing the running noise. Further, by setting the loss tangents tan $\delta$ at zero degrees Celsius, the loss tangents tan $\delta$ at 70 degrees Celsius, the content A1 of carbon black, the content A2 of silica, and the content A3 of sulfur to the preferable ranges, it was possible that the wet grip performance, the rolling resistance performance, and the anti-wear performance were improved.

**Claims**

1. A pneumatic tyre comprising a noise damper fixed to a tyre inner cavity surface and made of a porous material, wherein in the noise damper, a ratio (E2/E1) between breaking energy E2 after thermal aging performed by leaving the noise damper for 1000 hours under an environment of 80 degrees Celsius and breaking energy E1 before the thermal aging is 0.7 or more.

2. The pneumatic tyre according to claim 1, wherein density of the noise damper is in a range of from 10 to 40 kg/m3.

3. The pneumatic tyre according to claim 1 or 2, wherein tensile strength of the noise damper is in a range of from 70 to 115 kPa.

4. The pneumatic tyre according to any one of claims 1 to 3 further comprising a carcass extending between a pair of bead portions, a belt layer arranged on an outer side in a radial direction of the carcass and inside a tread portion, and a damping rubber body arranged inside the tread portion and on an inner side or an outer side in a tyre radial direction of the belt layer, wherein a width W1 in a tyre axial direction of the damping rubber body is in a range of from 60% to 130% of a width w2 in the tyre axial direction of the belt layer.

5. The pneumatic tyre according to claim 4, wherein a ratio (H1/H2) between hardness H1 of the damping rubber body and hardness H2 of a tread rubber arranged in the tread portion is in a range of from 0.5 to 1.0.

6. The pneumatic tyre according to any one of claims 1 to 5 further comprising a tread rubber arranged in a tread portion, wherein in the tread rubber, a loss tangent tan $\delta$ at zero degrees Celsius is 0.40 or more and the loss tangent tan $\delta$ at 70 degrees Celsius is 0.20 or less.

7. The pneumatic tyre according to any one of claims 1 to 6 further comprising a tread rubber arranged in a tread portion, wherein the tread rubber contains carbon black, silica, and sulfur, and

a content A1 (phr) of the carbon black, a content A2 (phr) of the silica, and a content A3 (phr) of the sulfur satisfy relationship of a following expression (1):

$$(1.4 \times A1 + A2) / A3 \geq 20 \ldots (1).$$

# FIG.1

# FIG.2

# FIG.3

## INTERNATIONAL SEARCH REPORT

| International application No. |
|---|
| PCT/JP2017/037358 |

### A. CLASSIFICATION OF SUBJECT MATTER
Int.Cl. B60C5/00(2006.01)i, B60C1/00(2006.01)i, B60C9/18(2006.01)i, B60C11/00(2006.01)i

According to International Patent Classification (IPC) or to both national classification and IPC

### B. FIELDS SEARCHED
Minimum documentation searched (classification system followed by classification symbols)
Int.Cl. B60C5/00, B60C1/00, B60C9/18, B60C11/00

Documentation searched other than minimum documentation to the extent that such documents are included in the fields searched
| | |
|---|---|
| Published examined utility model applications of Japan | 1922–1996 |
| Published unexamined utility model applications of Japan | 1971–2018 |
| Registered utility model specifications of Japan | 1996–2018 |
| Published registered utility model applications of Japan | 1994–2018 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2009-298120 A (YOKOHAMA RUBBER CO., LTD.) 24 December 2009, claims, paragraphs [0012], [0013]<br>& US 2009/0308523 A1, claims, paragraphs [0014], [0015]<br>& EP 2138331 A1 & CN 101607451 A | 1–3<br>4, 6–7<br>5 |
| Y | JP 07-144508 A (SUMITOMO RUBBER INDUSTRIES, LTD.) 06 June 1995, claims, paragraphs [0007], [0014] (Family: none) | 4 |

☒ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 January 2018 | 16 January 2018 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

International application No.

PCT/JP2017/037358

C (Continuation).    DOCUMENTS CONSIDERED TO BE RELEVANT

| Category* | Citation of document, with indication, where appropriate, of the relevant passages | Relevant to claim No. |
|---|---|---|
| Y | WO 2014/178174 A1 (BRIDGESTONE CORPORATION) 06 November 2014, claims, paragraph [0022], tables 1, 2 <br> & US 2016/0023514 A1, claims, paragraph [0052], tables 1, 2 <br> & EP 2993062 A1 & CN 105163955 A | 6-7 |
| Y | JP 2015-059140 A (SUMITOMO RUBBER INDUSTRIES, LTD.) 30 March 2015, claims 2-3, paragraph [0006] <br> & US 2016/0200901 A1, claims 2-3, paragraph [0006] <br> & WO 2015/040991 A1 & EP 3037468 A1 & CN 105492523 A | 7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4960626 B